# EUROPÄISCHE PATENTSCHRIFT

(11) **EP 4 072 739 B1**
(45) Veröffentlichungstag und Bekanntmachung des Hinweises auf die Patenterteilung: **25.03.2026**
(21) Anmeldenummer: 20841655.2
(22) Anmeldetag: 10.12.2020
(51) Int. Cl.: B05C 11/02, B05C 17/005, B23P 6/00, F01D 5/00

(54) **VORRICHTUNG UND VERFAHREN ZUR HERSTELLUNG VON KANTENSCHUTZBESCHICHTUNGEN**
DEVICE AND METHODS FOR PRODUCING EDGE PROTECTION COATINGS
DISPOSITIF ET PROCÉDÉS DE RÉALISATION DE REVÊTEMENTS DE PROTECTION D'ARÊTES

(30) Priorität: 12.12.2019 DE 102019134132
(43) Veröffentlichungstag der Anmeldung: 19.10.2022
(73) Patentinhaber: Mankiewicz Gebr. & Co. GmbH & Co. KG, 21107 Hamburg (DE)
(72) Erfinder: COSTA, Philipp, 21149 Hamburg (DE); WEINHOLD, Alexander, 21073 Hamburg (DE); WEHNER, Jochen, 21075 Hamburg (DE)
(86) Internationale Anmeldenummer: PCT/DE2020/101050
(87) Internationale Veröffentlichungsnummer: WO 2021/115539

(56) Entgegenhaltungen:
- DE-U1- 202008 011 551
- DE-U1- 202018 001 242
- US-A1- 2017 239 682

## Beschreibung

Die vorliegende Erfindung betrifft Vorrichtungen und Verfahren zum Aufbringen von Beschichtungen auf stark gekrümmten Bauteiloberflächen. Sie betrifft vor allem Vorrichtungen und Verfahren zum Applizieren eines Beschichtungstoffs an oder auf den Kanten eines Bauteils, insbesondere Vorrichtungen und Verfahren zum Applizieren eines Erosionsschutz-Beschichtungsstoffs. Sie betrifft weiterhin die Verwendung dieser Beschichtungen als Erosionsschutz von Bauteilen, die sich in gasförmigen oder flüssigen Medien bewegen, insbesondere die Verwendung als Kantenschutz für Rotorblätter, Flügel oder Tragflächen.

Oberflächen von Objekten, die mechanischen Belastungen durch Erosion ausgesetzt sind, werden in der Regel mit einem Erosionsschutz versehen. Unter dem Begriff Erosion wird im Folgenden die Beschädigung eines Materials durch flüssige oder feste Stoffe verstanden, welche sich in Form von Tropfen oder Partikeln in einem gasförmigen oder flüssigen Medium bewegen. Bekannte Beispiele sind die Erosion durch Regen, Hagel, Staub oder Sand an Rotorblättern von Windkraftanlagen und Hubschraubern, an Flugzeugfügeln und an Schiffsschrauben.

Die Beständigkeit von Oberflächen gegenüber Erosion wird durch das Anbringen von Beschichtungen erreicht, welche hinreichend elastisch sind, um die Aufprallkräfte abzufangen, und welche gleichzeitig ausreichende Härte und Abrasionsbeständigkeit aufweisen. Mit diesen Erosionsschutzbeschichtungen kann die gesamte Oberfläche eines Bauteils, beispielsweise ein Rotorblatt, beschichtet sein. Es können jedoch auch nur besonders exponierte Oberflächenareale des Bauteils beschichtet sein, wie z.B. die Vorderkante des Rotorblatts.

Im Folgenden wird unter den Begriffen Kantenschutz und Kantenschutzbeschichtung eine auf der Kante eines Bauteils angebrachte Beschichtung verstanden, insbesondere eine Erosionsschutzbeschichtung. Als Kante wird dabei der Abschnitt eines Bauteils bezeichnet, an dem zwei Flächen aneinander stoßen.

Die Vorderkanten von Rotorblättern, Flügeln oder Tragflächen sind üblicherweise stark gekrümmte Oberflächen, auf denen die Applikation von flüssigen oder pastösen Beschichtungsstoffen schwierig ist. Aus WO 2008/157013 und US 2017/0239682 sind Applikatoren und Dosierspitzen bekannt, die zur Ausbesserung von Erosionsschäden an Rotorblattbeschichtungen eingesetzt werden. Um die aerodynamischen Eigenschaften der Rotorblätter zu erhalten, müssen die durch Erosion entstandenen Vertiefungen, Abschürfungen oder Löcher in der Beschichtung ausgeglichen werden, ohne die Form des Blatts durch überschüssigen Materialauftrag zu beeinträchtigen. In der Regel werden bei einer Reparatur nur die beschädigten Areale einer Beschichtung ausgebessert, die im Vergleich zur Gesamtoberfläche klein sind.

Aus DE 202018001242 sind Zahnspachtel mit seitlichen Laufrädern bekannt, welche den gleichmässigen Auftrag von Klebemassen zum Anbringen von Fliesen oder Platten ermöglichen. Aus DE 202008011551 sind Rakelwerkzeuge mit einem Handgriff und einer Glättungslippe bekannt, welche das Auftragen und Glätten von Bodenbeschichtungen in einem Arbeitsschritt ermöglichen. Mit diesen Werkzeugen können Beschichtungsstoffe mit gleichmässigen Schichtdicken auf ebene Oberflächen aufgebracht werden.

Aufgabe der vorliegenden Erfindung ist es daher, verbesserte Vorrichtungen und Verfahren zur Herstellung von ErosionsschutzBeschichtungen, insbesondere von Kantenschutzbeschichtungen, zur Verfügung zu stellen. Die zugrunde liegende Aufgabe wird gemäß den vorliegenden Ansprüchen gelöst. Weitere Ausführungsformen werden in der Beschreibung offenbart.

Die erfindungsgemäße Vorrichtung ist nach der Art eines Rakels so ausgestaltet, dass damit flüssige oder pastöse Materialien, wie beispielsweise Beschichtungsstoffe, auf eine gekrümmte Substratoberfläche gleichmäßig und kontinuierlich appliziert werden können. Mit Hilfe der erfindungsgemäßen Vorrichtung können Materialien ohne Weiteres an oder auf den Kanten eines Bauteils appliziert werden. Die Vorrichtung weist eine Grundplatte aus einem flexiblen Material auf, wobei an zumindest einer ihrer Seiten eine Zahnung angebracht ist. Parallel zur gezahnten Seite verläuft auf der Grundplatte ein Kanal mit zumindest einem Einfüllstutzen und mehreren Austrittsöffnungen. Über die Einfüllstutzen wird das Material zur Beschichtung wie beispielsweise flüssige oder pastöse Beschichtungsstoffe zugeführt, durch die Austrittsöffnungen wird das Material auf die Oberfläche des Bautteils gegeben. Auf der Seite des Kanals, welche der gezahnten Seite abgewandt ist, ist eine Dichtlippe angeordnet, welche einen unerwünschten Austritt des Materials bzw. des Beschichtungsstoffes verhindert.

Geeignete Materialien für die Grundplatte sind hinreichend flexible und chemikalienbeständige Kunststoffe. Im Folgenden wird unter dem Begriff Chemikalienbeständigkeit die Eigenschaft von Stoffen verstanden, einer Beanspruchung durch die Einwirkung von Chemikalien ohne Minderung des Gebrauchswerts zu widerstehen. In einer bevorzugten Ausführungsform ist der eingesetzte Kunststoff gegen die Einwirkung von Bestandteilen der Beschichtungsstoff-Zusammensetzungen beständig, vor allem gegen die Einwirkung von Beschichtungsstoffen aus denen Erosionsschutzbeschichtungen hergestellt werden. Unter dem Begriff Beschichtungsstoff wird im Folgenden eine flüssige oder pastöse Zusammensetzung verstanden, welche nach ihrer Applikation auf ein Substrat durch Aushärten eine Beschichtung bildet. Der Aushärtungsprozess umfasst dabei sowohl das Trocknen durch Verdampfen der Lösemittel als auch die chemische Reaktion von Bestandteilen der Zusammensetzung.

Aufgrund ihrer besonderen Ausgestaltung kann die erfindungsgemäße Vorrichtung sehr genau an die Konturen des zu beschichtenden Bauteil angepasst werden. In einer erfindungsgemäß bevorzugten Ausführungsform erreicht die flexible Grundplatte einen Biegeradius von bis zu 10 **mm.** Daher werden insbesondere Kunststoffe mit Elastizitätsmodulen im Bereich von 1000 bis 1600 MPa, bevorzugt 1050 bis 1550 MPa, besonders bevorzugt 1100 bis 1500 MPa, eingesetzt.

Die erfindungsgemäße Zahnung besteht aus einer Struktur, die an einer oder mehreren Seiten der Grundplatte angeordnet ist. Sie kann dabei an nur einer der Seiten oder zusätzlich an den angrenzenden Seiten angebracht sein. Die Zahnung umfasst eine Anzahl von Zähnen, welche mit einer Zahnbreite (h) und einem Abstand (i) parallel zu einander auf der Grundplatte angebracht sind. Die Zahnbreite (h) liegt im Bereich von 0,2 bis 0,7 mm, bevorzugt von 0,3 bis 0,6 mm, besonders bevorzugt von 0,4 bis 0,5 mm. Der Abstand (i) zwischen zwei Zähnen beträgt 1,6 bis 2,6 mm, bevorzugt 1,8 bis 2,4 mm, besonders bevorzugt 2,0 bis 2,2 mm.

Die Zähne sind so ausgestaltet, dass sie senkrecht auf der Platte stehen und eine Höhe (e) aufweisen. Weiterhin weisen die Zähne eine Länge (g) auf, wobei ein Längenabschnitt über die Seitenkante der Platte hinausragt. Erfindungsgemäß bevorzugt entspricht die Länge dieses Abschnitts, welcher der Zahnlänge (f) entspricht, der Zahnhöhe (e). Die Zahnhöhe (e) und die Zahnlänge (f) liegen im Bereich von 0,2 bis 5,0 mm. In Abhängigkeit von der Viskosität des verwendeten Beschichtungsstoffs kann durch das gewählte Verhältnis von Zahnhöhe (e) zu Abstand (i) die Schichtdicke des aufgetragenen flüssigen oder pastösen Beschichtungsstoffs bestimmt werden. Im Folgenden wird diese als Nassfilmschichtdicke bezeichnet.

Schutzbeschichtungen sind im Allgemeinen dickschichtig und weisen Trockenfilmschichtdicken zwischen 100 und 1000 µm auf. Unter dem Begriff Trockenfilmschichtdicke wird im Folgenden die Dicke der ausgehärteten oder getrockneten Beschichtung verstanden. Zur Herstellung solcher Schutzbeschichtungen müssen daher die verwendeten Beschichtungsstoffe in entsprechenden Nassfilmschichtdicken appliziert werden.

Insbesondere Kantenschutzbeschichtungen für Flügel oder Rotorblätter dürfen die Aerodynamik dieser Bauteile nicht verschlechtern, d.h. Beschichtungsstoffe müssen so appliziert werden, dass die Beschichtung an der stark beanspruchten Vorderkante die erforderlichen Schichtdicke aufweist. Auf den Flügel- oder Rotorblattflächen hingegen sollte die Schichdicke möglichst gering sein, um Beeinträchtigungen durch Veränderungen des aerodynamischen Profils der Flügel oder Rotorblätter zu vermeiden. Bevorzugt liegen die Trockenfilmschichtdicken an den Vorderkanten im Bereich zwischen 100 bis 2000 µm, während die Trockenfilmschichtdicken auf den Flächen bei unter 50 µm liegen. Um diese Schichtdickenprofile zu erreichen, weist die erfindungsgemäße Vorrichtung in einer bevorzugten Ausführungsform an den äußeren Rändern der gezahnten Seite der Grundplatte zahnlose Abschnitte auf. Das Längenverhältnis der randseitigen, zahnlosen Abschnitte zum mittigen, gezahnten Abschnitt wird entsprechend dem gewünschten Schichtdickenprofil und der Form des zu beschichtenden Bauteils gewählt.

In einer weiteren Ausführung der vorliegenden Erfindung sind die Zähne halb- oder beidseitig rund und/oder oval gestaltet. Es hat sich überraschenderweise gezeigt, dass Zähne mit einer geringeren Auflagefläche auf das Substrat besonders vorteilhaft sind. Zum einen wird dadurch die Gefahr eines Abrutschens der Vorrichtung während der Applikation vermindert. Zum anderen werden auf diese Weise lediglich schmale Riefen erzeugt, die leicht wieder verlaufen können. Als Riefen werden die Streifen bezeichnet, in denen kein oder nur sehr wenig Material aufgetragen werden kann, da die auf dem Substrat aufliegenden Zähne den Auftrag während der Applikation verhindern.

Die erfindungsgemäße Vorrichtung weist einen parallel zur gezahnten Seite angeordneten Kanal auf, durch welchen der zu applizierende Beschichtungsstoff zugeführt wird. Weiterhin weist der Kanal auf der Seite, die der gezahnten Seite zugewandt ist, mehrere Öffnungen auf durch die der zugeführte Beschichtungsstoff abfließen kann. Diese Austrittsöffnungen sind in regelmäßigen Abständen angeordnet, so dass der Beschichtungsstoff gleichmäßig auf das Substrat aufgebracht wird. Um eine kontinuierliche Zuführung zu ermöglichen kann der Kanal zumindest einen Einfüllstutzen aufweisen. Bevorzugt ist der Kanal mit zwei Einfüllstutzen versehen, die jeweils an den sich gegenüberliegenden Enden angebracht sind. Über die Füllstutzen kann die Vorrichtung an eine Dosieranlage angeschlossen werden, welche eine gleichmäßige, vorgegebene Zuführung des Beschichtungsstoffes erlaubt.

Der erfindungsgemäß Kanal weist weiterhin geeignete Querschnitte auf, um den Fließwiderstand des Beschichtungsstoffs möglichst gering zu halten. Die Größe des Kanalquerschnitts und der Austrittsöffnungen sind dabei abhängig von den Eigenschaften des Beschichtungsstoffs wie beispielsweise der Viskosität.

In einer weiteren vorteilhaften Ausführungsform ist der Kanal flexibel ausgeführt, um die Bewegung der flexiblen Grundplatte nicht zu behindern. Geeignete Ausgestaltungen sind schlauch- oder wellenförmige Elemente, welche eine hinreichende Stabilität aufweisen, um während des Applikationsvorgangs einen gleichförmigen Materialfluß zu gewährleisten. Bevorzugt ist der Kanal als Wellschlauch oder Wellrohr gestaltet.

In einer weiteren bevorzugten Ausführungsform ist der Kanal in einem Abstand zu der gezähnten Seite angebracht. Auf diese Weise wird während der Applikation zwischen der Substratoberfläche und der erfindungsgemäßen Vorrichtung ein Reservoir für den Beschichtungsstoff gebildet. Die Größe des Abstands und somit auch die Größe des Reservoirs wird dabei so gewählt, dass der eingesetzte Beschichtungsstoff kontinuierlich und gleichmäßig aus den Austrittsöffnungen abfließen kann.

Bevorzugt weist die Vorrichtung weiterhin zumindest eine Dichtlippe auf, welche auf der Seite des Kanals angeordnet ist, die von der gezahnten Seite abgewandt ist. Die Dichtlippe begrenzt das Reservoir und verhindert ein unerwünschtes Abfließen oder Austreten des Beschichtungsstoffs.

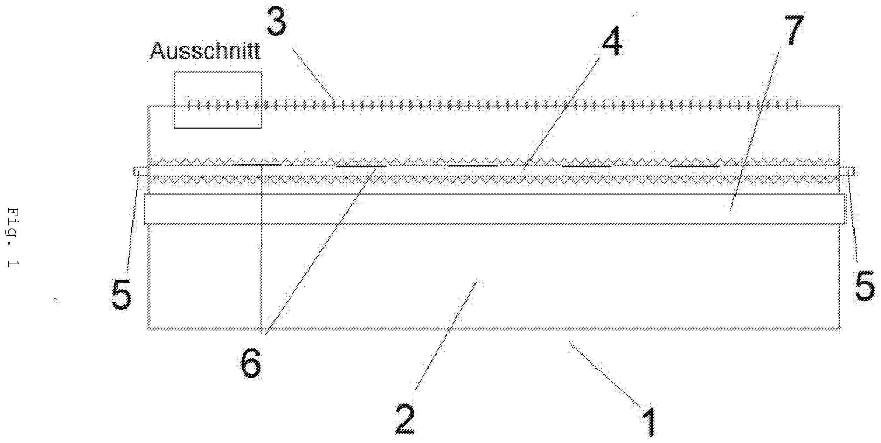

Die Zeichnungen Fig. 1, Fig.2 und Fig. 3 stellen schematisch eine beispielhafte Ausgestaltung der erfindungsgemäßen Vorrichtung dar. Fig. 1 zeigt ein erfindungsgemäßes Rakel (1).

Die flexible Grundplatte (2) weist auf einer Seite eine Zahnung (3) auf. Weiterhin ist auf der Grundplatte (2) ein Kanal (4) angebracht, welcher an seinen beiden Enden jeweils einen Einfüllstutzen (5) aufweist. Auf der Seite des Kanals (4), welche der Zahnung (3) zugewandt ist, sind mehrere Austrittsöffnungen (6) eingefügt. Auf seiner gegenüberliegenden Seite ist eine Dichtlippe (7) angebracht.

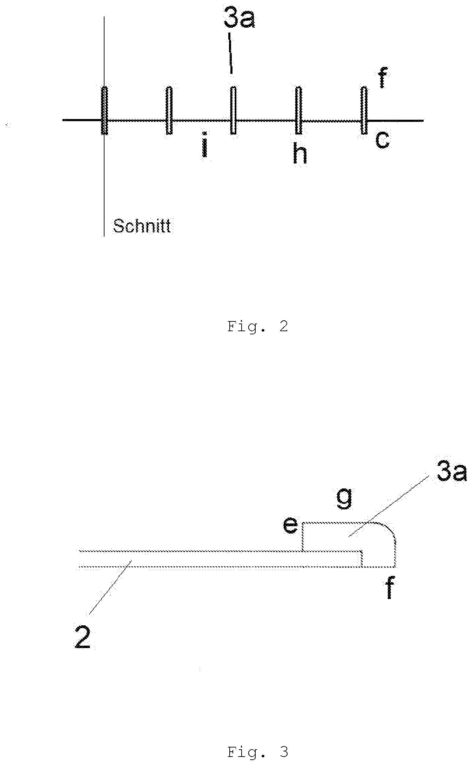

Fig. 2 zeigt den vergrößerten Ausschnitt der gezahnten Seite des Rakels (3) in der Aufsicht. Die Zahnung umfasst eine Anzahl von Zähnen (3a), welche mit einer Zahnbreite (h) und einem Abstand (i) parallel zu einander auf der Grundplatte angebracht sind. Die Zähne (3a) sind so ausgestaltet, dass sie um eine Länge, die im Folgenden als Zahnlänge (f) bezeichnet wird, über die Grundplatte hinausragen.

Fig. 3 zeigt einen der Zähne (3a) des Rakels im Querschnitt. Der Zahn (3a) ist so ausgestaltet, dass er senkrecht auf der Platte (2) steht und eine Höhe (e) aufweist. Er hat eine Gesamtlänge (g), wobei ein Längenabschnitt, der als Zahnlänge (f) bezeichnet wird, über die Seitenkante der Platte (2) hinausragt. In der dargestellten Ausführungsform sind die Zahnlänge (f) und die Zahnhöhe (e) gleich groß.

Die erfindungsgemäße Vorrichtung kann insbesondere zur Applikation von Beschichtungsstoffen an oder auf Bauteilkanten verwendet werden. Aufgrund ihrer Eigenschaften kann sich die Vorrichtung ohne Weiteres an die Konturen stark gekrümmter Oberflächen, wie sie beispielsweise an Kanten von Bauteilen auftreten, anpassen. Dadurch wird ein kontinuierlicher, gleichmäßiger Auftrag von Beschichtungsstoff erreicht, wie er zur Herstellung von Schutzbeschichtungen benötigt wird, insbesondere zur Herstellung von Beschichtungen zum Erosionsschutz an den Vorderkanten von Rotorblättern, Flügeln oder Tragflächen. Mit Hilfe der erfindungsgemäßen Vorrichtung können Beschichtungsstoffe in einem gleichbleibenden Schichtdickenprofil wie oben beschrieben in einem Zug ohne Unterbrechung aufgetragen werden.

In einer weiteren Ausführungsform der vorliegenden Erfindung wird die Vorrichtung in Verfahren zur Herstellung einer Schutzbeschichtung eingesetzt. Die Verfahren weisen dabei die folgenden Schritte auf:
(a) Bereitstellen eines Beschichtungsstoffes
(b) Applizieren des Beschichtungsstoffs auf ein Bauteil mit Hilfe der erfindungsgemäßen Vorrichtung
(c) Aushärten des applizierten Beschichtungsstoffs zu einer Beschichtung

Mit Hilfe des erfindungsgemäßen Verfahrens können dickschichtige Schutzbeschichtungen hergestellt werden, welche Trockenfilmschichtdicken im Bereich 100 bis 2000 µm, bevorzugt 300 bis 1500 µm, besonders bevorzugt 450 bis 1000 µm, ganz besonders bevorzugt 600 bis 750 µm, aufweisen. Bevorzugt werden diese Schichtdicken dabei an Bauteilkanten erzeugt, besonders bevorzugt an Vorderkanten von Tragflächen, Flügeln und Rotorblättern.

Für den Einsatz im Verfahren geeignete Beschichtungsstoffe zeigen eine hinreichende Fließfähigkeit und können frei von Lösemitteln sein. Bei lösemittelfreien Zusammensetzungen entspricht die Trockenfilmschichtdicke der Nassfilmschichtdicke. Erfindungsgemäß bevorzugt werden Beschichtungsstoffe zur Herstellung von Erosionsschutzbeschichtungen eingesetzt.

Besonders bevorzugt werden Beschichtungsstoff-Zusammensetzungen, wie sie aus der deutschen Patentanmeldung DE 102017003034 A1 bekannt sind, eingesetzt. Diese Zusammensetzungen umfassen jeweils eine Stammkomponente, welche trifunktionelle Polycaprolactonpolyole, Polycarbonatdiole oder Polycaprolactonpolyole sowie Polycarbonatdiole als Bindemittel enthält, und eine Härterkomponente, welche kristallisationsbeständige, isocyanatfunktionellen Präpolymere als Härter enthält. Die in DE 102017003034 A1 offenbarten Zusammensetzungen zur Herstellung einer Erosionsschutzbeschichtung werden hiermit ausdrücklich einbezogen.

Erfindungsgemäß bevorzugt wird der Beschichtungsstoff in Schritt (b) nur auf einen Teil der Oberfläche des Bauteils appliziert. Bevorzugt wird der Beschichtungsstoff auf die Kanten oder an den Kanten des Bauteils appliziert.

Das Aushärten des applizierten Beschichtungsstoffs zu einer Beschichtung in Schritt (c) erfolgt bevorzugt bei Temperatur im Bereich von 10 bis 70 °C, bevorzugt im Bereich 15 bis 26 °C, weiterhin bevorzugt im Bereich von 40 bis 70 °C, insbesondere 50 bis 65 °C.

Das erfindungsgemäße Verfahren wird besonders bevorzugt zur Beschichtung der Kanten von Rotorblättern, Flügeln oder Tragflächen eingesetzt, insbesondere zur Beschichtung der Kanten, die im besonderen Maß einer Erosion ausgesetzt sind.

## Patentansprüche

1. Vorrichtung zur Applikation von Beschichtungstoffen auf eine Substratoberfläche umfassend
eine Grundplatte(2) mit einer an zumindest einer ihrer Seiten angebrachten Zahnung (3),
einen parallel zur gezahnten Seite angeordneten Kanal (4), sowie
zumindest eine auf der von der gezahnten Seite abgewandten Seite des Kanals (4) angeordneten Dichtlippe (7),
**dadurch gekennzeichnet, dass** die Grundplatte (2) eine Grundplatte aus einem flexiblen Material ist und der Kanal (4) mehrere, regelmäßig angeordnete Austrittsöffnungen (6) umfasst.

2. Vorrichtung nach Anspruch 1, **dadurch gekennzeichnet, dass** die flexible Grundplatte (2) einen Biegeradius von bis zu 10 mm erreicht.

3. Vorrichtung nach Anspruch 1 oder 2, **dadurch gekennzeichnet, dass** die Zahnung (3) eine Anzahl von Zähnen (3a) umfasst, welche senkrecht auf der Grundplatte (2) angeordnet sind.

4. Vorrichtung nach einem der voranstehenden Ansprüche,
**dadurch gekennzeichnet, dass** die Vorrichtung an den äußeren Rändern der gezahnten Seite zahnlose Abschnitte aufweist.

5. Vorrichtung nach einem der voranstehenden Ansprüche,
**dadurch gekennzeichnet, dass** die Zähne (3a) einen Längenabschnitt (f) aufweisen, welcher über die Grundplatte hinausragt.

6. Vorrichtung nach einem der voranstehenden Ansprüche,
**dadurch gekennzeichnet, dass** der Kanal (4) zumindest einen Einfüllstutzen (5) aufweist.

7. Verwendung der Vorrichtung nach einem der Ansprüche 1 bis 6 zur Applikation eines Beschichtungsstoffs.

8. Verfahren zur Herstellung einer Schutzbeschichtung umfassend
(a) Bereitstellen des Beschichtungsstoffes,
(b) Applizieren des Beschichtungsstoffs auf ein Bauteil mit Hilfe einer Vorrichtung,
(c) Aushärten des applizierten Beschichtungsstoffs zu einer Beschichtung,
**dadurch gekennzeichnet, dass** die Vorrichtung eine Vorrichtung nach einem der Ansprüche 1 bis 6 ist.

9. Verfahren nach Anspruch 8, **dadurch gekennzeichnet, dass** in Schritt (a) Beschichtungsstoffe zur Herstellung einer Erosionsschutzbeschichtung eingesetzt werden.

10. Verfahren nach Anspruch 8 oder 9, **dadurch gekennzeichnet, dass** in Schritt (b) der Beschichtungsstoff nur auf einen Teil der Oberfläche des Bauteils appliziert wird.

11. Verfahren nach einem der Ansprüche 8 bis 10, **dadurch gekennzeichnet, dass** in Schritt (b) nur die Kante eines Rotorblatts, eines Flügels oder einer Tragfläche beschichtet wird.

## Claims

1. Device for applying coating materials to a substrate surface, with the device having
a base plate (2), with a toothing (3) mounted in at least one of its sides,
a channel (4) which is arranged parallel to the toothed side, as well as
at least one sealing lip (7) arranged on the side of the channel (4) which faces away from the toothed side,
**characterised by** the base plate (2) being a base plate made from a flexible material and by the channel (4) comprising several regularly arranged outlets (6).

2. Device according to claim 1, **characterised in that** the flexible base plate (2) reaches a bending radius of up to 10 mm.

3. Device according to claim 1 or 2, **characterised in that** the toothing (3) comprises a number of teeth (3a) which are perpendicular to the base plate (2).

4. Device according to one of the preceding claims, **characterised in that** the device has toothless sections at the outer edges of the toothed side.

5. Device according to one of the preceding claims, **characterised in that** the teeth (3a) have a length section (f) which projects beyond the base plate.

6. Device according to one of the preceding claims, **characterised in that** the channel (4) has at least one filler neck (5).

7. Use of the device according to any one of the claims 1 to 6 for the application of a coating material.

8. Method for producing a protective coating, with the method comprising the following steps
(a) providing a coating material,
(b) applying the coating material to a component by means of the device according to one of the claims 1 to 7,
(c) curing the applied coating material until a coating is obtained,
**characterised in that** the device is a device according to one of the claims 1 to 6.

9. Method according to claim 8, **characterised in that** coating materials for producing an erosion protection coating are employed in step (a).

10. Method according to claim 8 or 9, **characterised in that** in step (b) the coating material is applied to only one part of the surface of the component.

11. Method according to one of the claims 8 to 10, **characterised in that** in step (b) only the edge of a rotor blade, a wing or a hydrofoil is coated.

## Revendications

1. Dispositif d'application de matériaux de revêtement sur une surface de substrat comprenant
une plaque de base (2) dotée d'une denture (3) disposée sur au moins l'un de ses côtés,
un canal (4) disposé parallèlement au côté denté, ainsi qu'
au moins une lèvre d'étanchéité (7) disposée sur le côté du canal (4) opposé au côté denté,
**caractérisé en ce que** la plaque de base (2) est une plaque réalisée en matière souple et que le canal (4) comprend plusieurs orifices de sortie (6) disposés à intervalles réguliers.

2. Dispositif conforme à la revendication 1, **caractérisé en ce que** la plaque de base (2) souple présente un rayon de courbure allant jusqu'à 10 mm.

3. Dispositif conforme à la revendication 1 ou 2,
**caractérisé en ce que** la denture (3) comprend un certain nombre de dents (3a) disposées d'aplomb sur la plaque de base (2).

4. Dispositif conforme à l'une des revendications précédentes, **caractérisé en ce que** le dispositif présente des sections sans dent sur les bords extérieurs du côté denté.

5. Dispositif conforme à l'une des revendications précédentes, **caractérisé en ce que** les dents (3a) présentent une section longitudinale (f) qui dépasse de la plaque de base.

6. Dispositif conforme à l'une des revendications précédentes, **caractérisé en ce que** le canal (4) présente au moins une tubulure de remplissage (5).

7. Utilisation du dispositif conforme à l'une des revendications 1 à 6 aux fins d'application d'un matériau de revêtement.

8. Procédé de réalisation d'un revêtement de protection comprenant
(a) la mise à disposition du matériau de revêtement,
(b) l'application du matériau de revêtement sur une pièce à l'aide d'un dispositif,
(c) le durcissement du matériau de revêtement appliqué pour former un revêtement,
**caractérisé en ce que** le dispositif est un dispositif conforme à l'une des revendications 1 à 6.

9. Procédé conforme à la revendication 8, **caractérisé en ce que**, à l'étape (a), les matériaux de revêtement sont mis en œuvre afin de réaliser un revêtement de protection contre l'érosion.

10. Procédé conforme à la revendication 8 ou 9, **caractérisé en ce que**, à l'étape (b), le matériau de revêtement est appliqué uniquement sur une partie de la surface de la pièce.

11. Procédé conforme à l'une des revendications 8 à 10, **caractérisé en ce que**, à l'étape (b), seule l'arête d'une pale de rotor, d'une aile ou d'une surface portante est revêtue.
